Europäisches Patentamt

European Patent Office

Office européen des brevets

(11) Veröffentlichungsnummer : **0 362 746 B1**

(19)

(12)

# EUROPÄISCHE PATENTSCHRIFT

(45) Veröffentlichungstag der Patentschrift :
**09.12.92 Patentblatt 92/50**

(51) Int. Cl.⁵ : **B01J 19/02, C01B 25/455**

(21) Anmeldenummer : **89118178.6**

(22) Anmeldetag : **30.09.89**

(54) **Vorrichtung und Verfahren zur Herstellung von Alkalimetallmonofluorphosphat.**

(30) Priorität : **07.10.88 DE 3834151**

(43) Veröffentlichungstag der Anmeldung :
**11.04.90 Patentblatt 90/15**

(45) Bekanntmachung des Hinweises auf die
Patenterteilung :
**09.12.92 Patentblatt 92/50**

(84) Benannte Vertragsstaaten :
**BE DE FR GB GR**

(56) Entgegenhaltungen :
**EP-A- 0 095 145**
**DE-A- 2 601 085**
**ZEITSCHRIFT FÜR WERKSTOFFTECHNIK,**
**Band 15, 1984, Weinheim (DE); H.SCHLACH-**
**TER, Seiten 331-338***
**IDEM**

(73) Patentinhaber : **BK LADENBURG GmbH,**
**Gesellschaft für chemische Erzeugnisse**
**Dr.-Albert-Reimann-Strasse 2**
**W-6802 Ladenburg (DE)**

(72) Erfinder : **Tänzler, Richard, Dr.**
**Herdichsgartenstrasse 30**
**W-6947 Laudenbach (DE)**
Erfinder : **Maurer, Alexander, Dr.**
**Kochelseeweg 1**
**W-6800 Mannheim-81 (DE)**
Erfinder : **Etzel, Armin**
**Insterburgerstrasse 12**
**W-6944 Hemsbach (DE)**
Erfinder : **Steinert, Hans-Georg**
**Jahnstrasse 9**
**W-6925 Eschelbronn (DE)**

(74) Vertreter : **Grussdorf, Jürgen, Dr. et al**
**Patentanwälte Zellentin & Partner**
**Rubensstrasse 30**
**W-6700 Ludwigshafen (DE)**

EP 0 362 746 B1

Jouve, 18, rue Saint-Denis, 75001 PARIS

## Beschreibung

Die Erfindung betrifft eine neue Vorrichtung zur Herstellung von Alkalimonofluorphosphaten. Besonders wird dabei ein Verfahren zur Herstellung von Natriummonofluorophosphat beschrieben.

Die Herstellung von Alkalimonofluorphosphaten ist bekannt (DE-A 21 08 121, DE-A 26 01 085, GB-C 11 86 664). Dabei werden Alkalifluorid und Alkaliphosphat, insbesondere Alkalimetaphosphat, in einem dem Endprodukt entsprechenden Molverhältnis bei Temperaturen von 650-750°C zusammengeschmolzen.

Schwierigkeiten ergeben sich bei allen Verfahren aus der Wahl des Reaktorwerkstoffes, da das Reaktionsmedium sehr aggressiv ist. Bekannt sind die Verwendung von Platin, Silber und Graphit. Bei den Edelmetallreaktoren ergibt sich das Problem der Duktilität des Metalls und der Standzeiten des Reaktors bei hohen Temperaturen. Heißerweichen und Rißbildung behindern eine großtechnische und kontinuierliche Reaktionsführung. Korrosion und Fluorwasserstoffaustritt aus dem Reaktionsofen sind die Folgen. Technisch werden auch Graphitreaktoren eingesetzt. Dabei erhält man zum Teil nur eingeschränkt verwendungsfähiges Produkt, da Abrieb, bestehend aus feinsten Graphitteilchen, das Aussehen des Produktes beeinträchtigt. Solche Produkte erscheinen optisch vergraut. Da Alkalimonofluorphosphate, insbesondere Natriummmonofluorphosphat, als Rohstoffe in der Kosmetikindustrie Anwendung finden, sind solche Vergrauungen in höchstem Grade unerwünscht. Neben der Luftoxidation des Graphits bei den notwendigen hohen Reaktionstemperaturen bewirkt dieser Abrieb im übrigen eine rasche Abnutzung der Reaktoren und ist somit für die kurzen Standzeiten verantwortlich.

Es stellte sich daher die Aufgabe, ein Reaktormaterial zu finden, mit dem einerseits die Qualitätsprobleme durch Verunreinigungen durch den Reaktorwerkstoff, andererseits die Korrosions- und Alterungsprobleme des Werkstoffs vermieden werden.

Diese Aufgabe wird durch die in den Ansprüchen näher gekennzeichneten Merkmale gelöst.

Kennzeichnend für die letzten Jahre sind enorme Fortschritte auf dem Gebiet der Werkstoffkunde, was zur Entwicklung von neuen Materialien geführt hat. Einer dieser modernen Werkstoffe ist Glaskohlenstoff. Diese Kohlenstoffart wird durch Pyrolyse aus einem stark verzweigten und vernetzten Polymermaterial hergestellt.

Am besten geeignet sind hochvernetzbare, aromatische Polymere, wie Polyphenylene, Polyimide, aromatische Epoxidformulierungen und Phenol- und Furanharze. Von praktischer Bedeutung sind vor allem Phenol- und Furanharze, die mit den in der Kunststoffindustrie üblichen Verfahren verarbeitet werden können und deren Preis im Bereich der Massenkunststoffe liegt.

Bei der Pyrolyse der vernetzten Polymeren bildet sich graphitischer Kohlenstoff mit $sp^2$-Bindung. Die C-Atome sind in ebenen Schichten mit hexagonaler Symmetrie angeordnet. Im Gegensatz zum Graphit sind diese Schichten beim glasartigen Kohlenstoff nicht regelmäßig über größere Bereiche hinweg geordnet, sondern es liegt eine polymerähnliche Knäuelstruktur vor.

Der Glaskohlenstoff zeigt eine außerordentlich hohe Korrosionsbeständigkeit gegen saure und alkalische Reagenzien und Schmelzen. Lediglich Sauerstoff oberhalb 550°C und oxidierende Schmelzen greifen Glaskohlenstoff an (Zeitschrift für Werkstofftechnik 15, 331-338 (1984), Verl. Chemie GmbH, Weinheim).

Völlig überraschend findet man im Gegensatz zum Graphit bei der Herstellung von Alkalimonofluorphosphaten in einem Reaktor aus Glaskohlenstoff keinen Abrieb und somit auch keine Verunreinigungen des Materials. Andererseits ist Glaskohlenstoff ebenso wie Graphit unter den Reaktionsbedingungen gegen die Reaktionsbestandteile auch als Schmelze völlig inert. Durch das Fehlen der Eigenschaft des Heißerweichens und die geringe Wärmeausdehnung werden sehr gute Haltbarkeiten der Reaktoren erzielt. Ein Schutz gegen oxidative Schädigung durch den Luftsauerstoff kann dadurch erreicht werden, daß der Reaktor mit einem Isoliermantel, vorzugsweise aus Graphit, umgeben ist, welcher den relativ spröden Werkstoff gleichzeitig gegen mechanische Beanspruchung von außen schützt. Eine oxidative Schädigung des Reaktorinneren wird dadurch vermieden, daß man entweder unter einer Schutzgasatmosphäre arbeitet, oder nur den unteren Teil des Reaktors aufheizt und im oberen Teil eine Schicht aus nichtgeschmolzenen Rohstoffen den Zutritt von Sauerstoff verhindert.

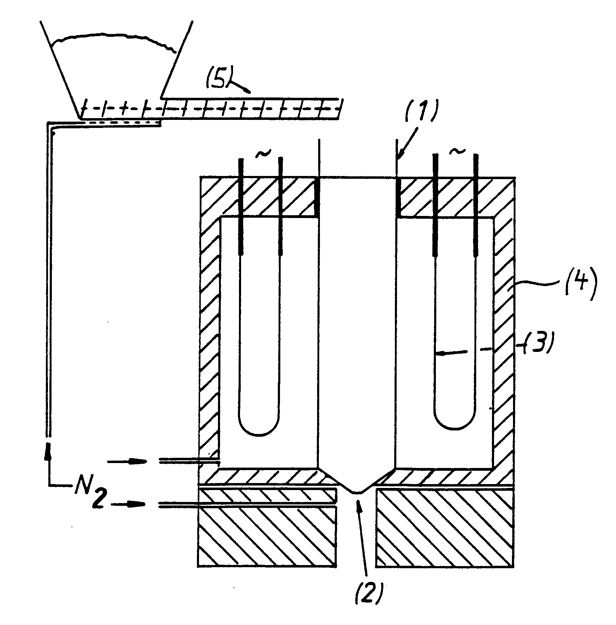

Zur Herstellung von Alkalimonofluorphosphaten werden das entsprechende Alkalimetaphosphat und Alkalimetallfluorid in äquimolaren Mengen vermischt, mit Inertgas, vorzugsweise Stickstoff zur Entfernung von Luftsauerstoff begast und über die Fördervorrichtung 5 unter Ausschluß von Luftzutritt in den in der Fig. 1 dargestellten Reaktor 1 aus Glaskohlenstoff eingetragen. Der Reaktor 1, der für kontinuierliche Verfahrensweise ausgeformt ist und vorzugsweise eine Rohrform mit Bodenauslauf 2 hat, wird von außen über Heizelemente 3 beheizt. Die Beheizung kann mittels Kohlenstoff-Heizelementen oder induktiv erfolgen. Ein Schutzmantel 4 isoliert den Reaktor 1 nach außen. Alternative Bauweisen, wie sie für andere Reaktormaterialien bekannt sind, sollen vom Schutz mitumfaßt sein, soweit sie von dem erfindungsgemäßen Material Gebrauch machen.

Es wird im Folgenden die Herstellung von Natriummmonofluorphosphat mit der beanspruchten Vorrichtung näher beschrieben, mit leicht veränderten Reaktionsbedingungen ist jedoch auch Kaliummonofluorphosphat aus Kaliumfluorid und einem Kaliummetaphosphat in mindestens gleichwertiger Reinheit herstellbar.

Zur Herstellung von Natriummonofluorophosphat werden Außentemperaturen an dem in Fig. 1 beschriebenen Reaktor von 900-1500°C, vorzugsweise 1000-1200°C eingesetzt. Dabei werden Reaktorinnentemperaturen > 650°C erreicht. Der gemischte Rohstoff wird im Reaktor unter Luftabschluß aufgeschmolzen, so daß das Endprodukt den Reaktoraustritt 2 als Schmelze verläßt. Es wird darauf geachtet, daß das Rohr nur zur Hälfte mit Schmelze gefüllt ist und der Rohstoff so nachgeführt wird, daß die Schmelze immer mit Feststoff (Pulvermaterial) überdeckt ist.

Aus dem Bodenauslauf tritt das Material in einen inertgasgefluteten Fallschacht ein und wird anschließend abgeschreckt. Das Material wird im Anschluß nach Stand der Technik aufgearbeitet.

Beispiel

67,2 kg Natriumfluorid werden mit 160 kg eines Natriummetaphosphates gemischt und 2 Stunden bei 200°C getrocknet. Über eine Dosierschnecke wird die mit Stickstoff entgaste Mischung in den Reaktor (Durchmesser 100 mm, Höhe 500 mm) eingetragen. Bei 1100°C Ofentemperatur erhält man einen Massenstrom von etwa 20 kg/h. Das Produkt wird im Stickstoffstrom abgeschreckt, vermahlen und siliert. Man erhält ein fremdpartikelfreies Produkt mit einer ionenchromatographisch gemessenen Reinheit von mindestens 98 %. Die Restbestandteile sind kleine Mengen Natriumfluorid und Phosphat.

**Patentansprüche**

1. Vorrichtung zur kontinuierlichen Herstellung von Alkalimetallmonofluorphosphat, bestehend aus einem senkrecht stehenden, rohrförmigen Reaktor (1) mit Ablauföffnung (2) und einer Heizung (3), die von einem Mantel (4) umgeben sind sowie einer Zuführvorrichtung (5) für die Rohstoffe und an sich bekannten Vorrichtungen zur Weiterverarbeitung, dadurch gekennzeichnet, daß der rohrförmige Reaktor (1) aus Glaskohlenstoff besteht.

2. Vorrichtung gemäß Anspruch 1, dadurch gekennzeichnet, daß die Heizung (3) sich im unteren Teil des Reaktors (1) befindet.

3. Vorrichtung gemäß Anspruch 1, dadurch gekennzeichnet, daß der Mantel (4) aus Graphit besteht.

4. Vorrichtung gemäß Ansprüchen 1-3, dadurch gekennzeichnet, daß der Reaktor (1) von der Außenluft abgeschlossen ist.

5. Verfahren zur Herstellung von Alkalimonofluorphospat durch Zusammenschmelzen von Alkalifluorid und Alkalimetaphosphat oder anderen Phosphaten in einem Molverhältnis von $Me_2O:P_2O_5:MeF = 1;:1:2$ bei Temperaturen von mindestens 650°C, dadurch gekennzeichnet, daß der Schmelzvorgang in einem Reaktor aus Glaskohlenstoff erfolgt.

**Claims**

1. Device for the continuous production of alkali metal monofluorophosphates, consisting of a vertically standing, tube-shaped reactor (1) with run-off opening (2) and a heating (3) which are surrounded by a mantle (4), as well as of a supply device (5) for the raw material and per se known devices for the further working up, characterised in that the tube-shaped reactor (1) consists of vitreous carbon.

2. Device according to claim 1, characterised in that the heating (3) is present in the lower part of the reactor (1).

3. Device according to claim 1, characterised in that the mantle (4) consists of graphite.

4. Device according to claims 1 - 3, characterised in that the reactor (1) is closed off from the outer air.

5. Process for the production of alkali metal monofluorophosphate by the melting together of alkali metal fluoride and alkali metal metaphosphate or of other phosphates in a mole ratio of $Me_2O:P_2O_5:MeF = 1:1:2$ at temperatures of at least 650°C, characterised in that the melting procedure takes place in a reactor of vitreous carbon.

**Revendications**

1. Appareil pour préparer en continu un monofluorophosphate de métal alcalin, appareil qui est constitué d'un réacteur tubulaire verticale (1) muni d'un orifice de décharge (2) et d'un chauffage (3), entourés d'une enveloppe (4), ainsi que d'un dispositif d'amenée (5) pour les matières premières et de dispositifs connus pour le traitement ultérieur, et qui est caractérisé en ce que le réacteur tubulaire (1) est en carbone vitreux.

2. Appareil selon la revendication 1 caractérisé en ce que le chauffage (3) se trouve dans la partie inférieure du réacteur (1).

3. Appareil selon la revendication 1 caractérisé en ce que l'enveloppe (4) est en graphite.

4. Appareil selon l'une quelconque des revendications 1 à 3, caractérisé en ce que le réacteur (1) est isolé de l'air extérieur.

5. Procédé pour préparer un monofluorophosphate de métal alcalin par fusion conjointe d'un fluorure de métal alcalin et d'un métaphosphate de métal alcalin ou d'autres phosphates dans un rapport molaire $Me_2O:P_2O_5: MeF$ de 1:1:2, à des températures d'au moins 650°C, procédé caractérisé en ce que l'opération de fusion est effectué dans un réacteur en carbone vitreux.